# EUROPEAN PATENT APPLICATION

(11) **EP 2 922 315 A1**
(43) Date of publication of application: **23.09.2015**
(21) Application number: 14305386.6
(22) Date of filing: 19.03.2014
(51) Int. Cl.: H04W 4/04, H04W 4/22, G01C 21/34, H04W 4/06, G01C 21/20

(54) **A device, a method and a user equipment providing direction information**

(71) Applicant: ALCATEL LUCENT, 92100 Boulogne-Billancourt (FR)
(72) Inventor: Kopp, Dieter, 70435 Stuttgart (DE); Weytens, Inez, 2018 Antwerp (BE)
(74) Representative: Therias, Philippe

(57) **Abstract**

A device, a method and a user equipment providing direction information

The invention concerns a device (200) comprising
- a device locator (201) operable to determine the position of a user equipment (102) relative to a predetermined layout (100),
- an event detector (202) operable to upon detection of the occurrence of a predetermined event determine the position of the event (101) relative to the predetermined layout (100),
- a guidance system (203) operable to determine direction information depending on the position of the event (101) and the position of the user equipment (102) relative to the predetermined layout (100), and
- a sender (204) operable to send a message addressed to the user equipment (102) containing the direction information.

The invention concerns a respective method as well.

## Description

### Field of the Invention

The present invention relates to a device, a method and a user equipment for providing direction information.

### Background of the Invention

Personal emergency evacuation guidance systems consider for evacuation in an emergency temporary refuge, safe routes, special equipment for evacuation or alarm systems for informing persons that need to be evacuated. However such systems do not provide individual guidance for individual persons.

### Summary of the Invention

The object of the invention is thus, to provide direction information individually to user equipments used by persons in need for evacuations or persons responsible for evacuating persons in need.

The main idea of the invention is a device comprising
- a device locator operable to determine the position of a user equipment relative to a pre-determined layout,
- an event detector operable to upon the detection of occurrence of the pre-determined event determine the position of the event relative to the pre-determined layout,
- a guidance system operable to determine direction information depending on the position of the event and the position of the user equipment relative to the pre-determined layout, and
- a sender operable to send a message addressed to the user equipment containing the direction information.

This way the message contains direction information that is most useful for the owner of the user equipment that was identified in a specific area of the structure. In particular, the guidance system this way can individually modify the direction information for each operator of a user equipment.

Advantageously, the device comprises receiver for receiving information regarding the user equipment operable to interact with the corresponding sender of user equipment or of server providing information. In case of the direct interaction with a corresponding sender of the user equipment this allows the use of an application, for example, on a smartphone as user equipment that directly connects to guidance system for exchange of the direction information via the respective senders and receivers.

In case of using a server providing this information instead of an application a regular mobile phone service may be used to provide the direction information from guidance system via the servers of the mobile network operators. This way the subscribers to the mobile system operator's network may be informed directly.

Advantageously, the guidance system is operable to access at least on predetermined rule mapping the respective position to the direction information. Using rules allows to pre-define the escape routes or the like for individuals that need to be rescued as well as for persons that assist in the rescue operation. This saves time and allows faster response. Advantageously, the receiver is operable to determine an identification of the user equipment. Using the identification of the user equipments allows to classify the user equipment by the identification.

Advantageously, the device comprises a selector for selecting a group of user equipments from a plurality of located user equipments wherein the sender is operable to send the message to selected group. This allows to send the message to a group of user equipments belonging to a certain group, like members of a rescue team or fire department.

Preferably, the device is operable to detect a change to a position or another event and to push an updated message to an individual user equipment. This allows to efficiently keep the direction information up-to-date.

Further developments of the invention can be gathered from dependent claims and the following description.

### Brief Description of the Drawings

In the following the invention will be explained further making reference to the attached drawings.
- Fig. 1: schematically shows a layout;
- Fig. 2: schematically shows part of a device;
- Fig. 3: schematically shows part of an user equipment;

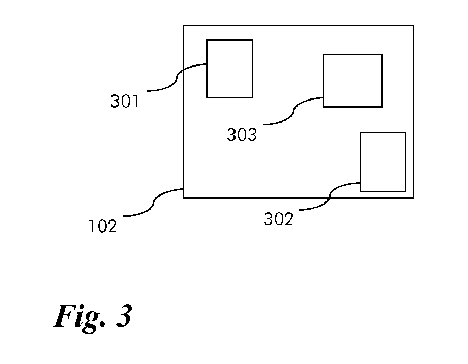

- Fig. 3: schematically shows a flowchart according to an embodiment.

### Detailed Description of the Invention

The invention concerns an enhancement for an emergency, disaster rescue or evacuation method at public locations like airports, main stations, shopping malls, sport events or concerts. The idea also applies to other scenarios in streets, skyscrapers or the like.

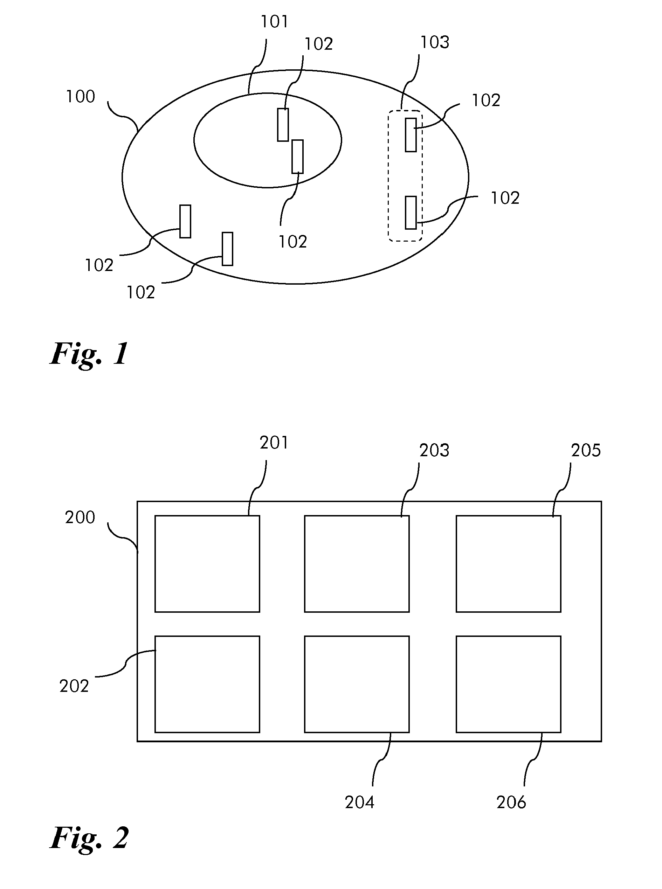

The individual scenario considered is modeled in a pre-determined layout 100 as depicted in figure 1. The pre-determined layout may consist of an electronically stored plan or blueprint of the area that is monitored. In figure 1 the layout 100 is depicted schematically, however, the layout may be more detailed. In particular, different layouts 100 may be used for different floors of a structure, such as the floors of a skyscraper or an airport. Likewise, the pre-determined layout 100 may be described differently, for example, as a graphical representation of the structure in question.

According to figure 1, the position of an event 101 is schematically depicted as an area within the pre-determined layout 100. This position of the event 101 in an example corresponds to an area.

This area is, in an example, defined by structural elements of the structure that is monitored. For example, walls and fire doors isolating particular area of an airport or a skyscraper define the size and shape of such area.

The position of the event is then identifying the respective area as disaster area. Such event may, for example, be the detection of smoke or fire in a pre-determined layout 100. Likewise, the information about such event by phone call, SMS or any other sensors may be used to identify the position of the event 101 within the pre-determined layout 100.

Additionally or alternatively, video or audio feed from surveillance systems of the structure may be used and processed to identify events and positions of the event 101. The surveillance system, the sensors or the communication networks to gather such information are typically preinstalled in the structure modeled by the pre-determined layout 100 and not depicted in figure 1.

Figure 1 also shows user equipment 102 distributed in the pre-determined layout 100. The distribution of the user equipment 102 in the predetermined layout 100 is, for example, determined by overlaying the position of the user equipment 102 with the position of the pre-determined layout 100. Likewise, the position of the event 101 is overlaid. Hence, the figure 1 depicts a snapshot in time of a situation in the structure that is monitored.

The definition of the pre-determined layout 100, the position of the event 101 and the position of the user equipment 102 may be defined using metadata and representation of the respective elements in a computer program. Preferably the pre-determined layout 100 is measured and stored as the aforementioned plan or blueprints and is available to the device for operating the rescue operation. Likewise, the input signals are processed and the information about the events and the position of the event in generated in the example by a computer program monitoring the different inputs as described below.

According to figure 1 user equipments 102 may also be grouped in a group 103 depicted as a dashed line. This grouping is explained in more detail below.

Figure 2 schematically depicts a device 200 for operating a rescue operation by determining direction information.

The device 200 comprises a device locator 201, an event detector 202, a guidance system 203 and a sender 204. Furthermore, the device 200 comprises a receiver 206 and a selector 205. These parts of the device 200 are, for example, processors, microprocessors or similar computing devices that are interconnected to exchange data via data links, for example, a data bus.

Furthermore, parts of the devices may be integrated into single processors or microprocessors as well.

Additionally, the device 200 and the user equipment 102 are can be connected via data links. Such data links are, for example, according to the well known wireless local area network (WLAN, 802.11 n), and a wide area network (WAN). Said connections are, for example, according to the well known internet protocol (IP), user datagram protocol (UDP) or transmission control protocol (TCP). Signaling between 200 and the user equipment is, for example, according to the well known simple object access protocol (SOAP), representation state transfer (REST) or session initiation protocol (SIP) or internet protocol multimedia subsystem (IMS). Addressing may be done using the well known uniform resource locators (URL), uniform resource identifiers (URI) or the like.

The connection can but does not have to be directly between the device 200 and the individual user equipment 102. In the example of the skyscraper or the airport the connection may be via wireless local area network hotspots, that are connected to the user equipments 102, on the one end and that are connected via a wide area network to the device 200. Alternatively or additionally, the connection may be via a mobile telecommunications network of a network provider operating wireless base stations covering the skyscraper or the airport. In this case, the wireless base stations connect to the user the equipments 102 via the well known 5G, long term evolution (LTE) standard, the UMTS standard or the GSM standard. The base stations are, for example, connected via the mobile backbone using optical access networks. In this case, intermediate servers such as the well known home location registry (HLR) may be used as intermediate servers for establishing the connection.

Figure 3 depicts schematically part of a user equipment 102, comprising a receiver 301, a sender 302 and a human machine interface 303.

The receiver 301, the sender 302, as well as the receiver 206 and the sender 204 are operable according to the aforementioned standards in order to establish a connection between the device 200 and the user equipment 102.

This communication is preferably a two way communication between the device 200 and the user equipment 102 as to permit the device 200 to provide rescue guidance based on event notifications provided by a surveillance system as well as on site users. In a preferred embodiment the device 200 is adapted to receive input about the event from one or more user equipment 102 of one or more on site users, i.e. of user equipment 102 located in the area that the pre-determined layout 100 describes.

In particular, the device 200 may comprise several senders 204 and receivers 206 in order to accommodate for different user equipments having varying senders and receivers themselves. This way, the device 200 is adapted to accommodate for a variety of different user equipments 102.

The sender 204 of the device 200 is operable to send a message addressed to the user equipment 102, containing direction information. Likewise, the receiver 301 of the user equipment 102 is adapted to receive this message from the device 200.

Furthermore, the human machine interface 303 of the user equipment 102 is operable to output the direction information received in the message. To this end, the human machine interface 303 is, for example, adapted to output the direction information as graphical signal, audio signal or a combination of both. The graphical output may be a message that is displayed on a display of the human machine interface 303. The audio output may be a message that is read out by a loudspeaker of the human machine interface 303 using a text to voice module. Likewise, the combination of both may be displayed and played via the respective output devices.

The user equipment 102 may optionally comprise a position sensing element, such as a global positioning system sensor or a triangulation module capable to determine the position of the user equipment 102. In an example, the global positioning system data is determined from input received via satellite signals. In another example, the position information is determined using the pre-determined layout stored on the user equipment and information about wireless base stations and their position within the pre-determined layout 100. The latter is well known as wireless triangulation.

The user equipment 102 may optionally facilitate recording capabilities, e.g. for video and/or audio, as to be able to send it through to the device 200.

The user equipment 102 is operable in this case to send the position information via the sender 302.

In any case, the sender 302 is adapted to send the information about the user equipment 102, for example, an address that can be used to send messages to the user equipment 102. In one scenario the user equipment 102 is adapted to connect to the wireless base stations of the airport or the skyscraper sending a request via the sender 302. In another example, the user equipment 102 is adapted to connect to the device 200 directly by sending a request to connect to the device 200 via the sender 302. In this example, the address of the device 200 is, for example, stored on the user equipment 102 and activated by the user via the human machine interface 303.

In a preferred embodiment the user equipment 102 is a smartphone comprising an operating system adapted to interact with the receiver 301, the sender 302 and the human machine interface 303 to perform the steps described above. The user equipment 102 may be a smart watch , Google Glass or any smart device linked, attached or embedded to a user as well.

Preferably, a computer program is stored under the user equipment 102 adapted for operating the interactions with the corresponding sender and receiver of the device 200 using the human machine interface 303. This way user input can be monitored and the connection to the device 200 can be initiated whenever the user opts into the participation to the service provided by the device 200.

Alternatively, the user equipment 102 may be a two way radio, a pager or a regular mobile phone as well. Likewise any other type of communication device comprising human machine interface 303, receiver 301 and sender 302 may be used as well.

In case the mobile telecommunication network is used, the connection between the user equipment 102 and the device 200 may be relayed via the respective servers of the operator of the mobile telecommunications network.

Furthermore, the device 200 comprises the device locator 201 operable to determine the position of user equipment 102 relative to the predetermined layout 100.

The device locator 201 is, for example, adapted to determine the position from connection requests received from the user equipment 102 via the respective sender 302 and receiver 206. The connection request may, for example, be the request from the computer module of the smartphone comprising the IP address of the user equipment 102.

Alternatively, the user equipment connects via the base station and in this case the phone number of the smartphone may be used as identification of the user equipment 102.

In any case, the device locator 201 may receive the position of the user equipment 102 relative to the pre-determined layout from the user equipment 102 directly. In this case, the device locator 201 generates the metadata for the overlay as depicted in figure 1. Preferably, the device locator 201 comprises routines for determining the position of user equipment 102 relative to the pre-determined layout 100 from absolute position data, such as, global positioning system coordinates, well known as GPS coordinates, received from the user equipment 102.

This way the user equipment 102 is independent from the pre-determined layout 100.

If the GPS data is not conceivable from the user equipment 102 instead the result of a wireless triangulations of the position using the base stations or WAN access points operating within the structure covered by the predetermined layout 100 are used to determine the position of the user equipment 102.

Methods for position determination using GPS or wireless triangulation are well known and not further explained here.

The device locator 201 may be adapted to receive the result of the wireless triangulation from a server operated by the provider of the mobile telecommunication network upon the request by the device locator 201.

Furthermore, the device 200 comprises the event detector 202 operable to upon the detection of the occurrence of a pre-determined event determined to position the event to the pre-determined layout.

The event detector 202 is, for example, adapted to evaluate input received from sensors such as optical sensors, heat sensors, smoke detectors or to evaluate audio input received via telephone lines to determine that a predetermined event occurred. Likewise, the event detector 202 may be adapted to receive input from fire detectors or CO sensors.

Such sensors are typically available in the structures like skyscrapers or airports. In the example, the respective sensors are connected via data links to the device 200.

The event detector 202 in the example is adapted to monitor the received inputs and compare them to pre-determined target values describing predetermined events. For example, when a CO level indicated by a signal received from a CO sensor exceeds a pre-determined CO threshold value, the event detector detects the occurrence of smoke as event within the pre-determined layout 100.

Likewise, the receipt of an emergency call by a voice recognition device may produce a signal indicating that an emergency situation has occurred and triggered the event detector to detect the emergency event. Furthermore a distress signal, e.g. a pre-defined emergency message, from a security application may be used. Such emergency call and emergency message can come from mobile or fixed user equipment 102 as well.

Methods for voice processing of calls are well known and not explained further here. The voice processing may be performed as part of the event detection within the event detector or the result may be received by event detector from a corresponding sender.

The position of the event 101 relative to the pre-determined layout 100 may be determined depending on the pre-determined mounting position of the sensor sending the signal that triggered the detection of the predetermined event.

For example, the CO sensor's mounting position is stored as metadata together with the pre-determined layout 100 and the signal sent comprises an indicator identifying uniquely the CO sensor. In that case, mapping of the identification of the CO sensor to the precision in the pre-determined layout 100 results in the position of the event 101.

The position of the event 101 is then defined by, for example, an area 101 as depicted in figure 1 that is overlaid to the pre-determined layout 100. Likewise, in case an emergency call is received, the position of the sender of the emergency call may be derived from information about the emergency call or information within the emergency call.

For example, the voice processing unit determines the location of the sender of the emergency call from the voice input received. Likewise, the position of the emergency call may be determined from pre-determined positions of emergency call equipment installed in pre-determined layout 100.

For example, emergency call communication devices like phones may be installed at pre-determined positions in the pre-determined layout 100. In this case, the voice input via the emergency call system is mapped to the position of the sender to determine the position of the event 101.

Furthermore, the device 200 a comprises guidance system 203 operable to determine direction information depending on the position of the event 101 and the position of the user equipment 102 relative to the pre-determined layout 100.

According to the example, the guidance system 203 is adapted to determine aforementioned direction information comprising guidance for individuals regarding the evacuation procedure. The direction information may be different between normal, warning and emergency situation according to an example.

Furthermore, a direction information may be different for each person or position within different areas of the pre-determined layout 100.

According to an example, the pre-determined layout 100 is separated into two different areas. One area is the position of the event 101, referred to as disaster area below. The other area, according to the example, is the rest of the pre-determined layout 100, excluding the disaster area. In this case, the individual user equipment 102 is located either in the disaster area or outside of the disaster area.

The areas may be determined depending on constructional information about the building, the skyscraper or the airport considering walls and fire doors, for example.

As mentioned above, the position of the event 101, that is the disaster area, is for example a single room within the skyscraper or airport. In this case, the direction information for user equipment 102 located within the disaster area is, for example, to immediately leave the disaster area.

The direction information may be audio or graphical information or a combination of both as described above. The direction information to individual user equipment 102 outside of the disaster area is, for example, determined to advise not to enter the disaster area. This direction information is likewise either voice information or graphical information or a combination of both. The direction information may be text information like a short message service message as well.

In any case, the guidance system 203 is operable to access at least one predetermined rule mapping the respective positions to a direction information.

In the example, the rule is pre-determined and stored in the guidance system 203. According to the example, the pre-determined rule maps the position of any user equipment located within the position of the event that is the disaster area to the direction information indicating to leave the area immediately. Likewise, the pre-determined rule maps the position of any user equipment 102 detected outside of the disaster area to the direction information indicating to not enter the disaster area.

Additionally or alternatively, the pre-determined rule may indicate different direction information for individual user equipment 102 depending on the respective situation or position within the either the disaster area or outside of the disaster area.

For example, user equipments 102 located near different exits of the disaster area may be mapped by the rule to direction information indicating the nearest exit. Likewise, user equipments 102 located outside of the disaster area may receive different direction information depending on their relative position to the disaster area.

In a preferred embodiment the receiver 206 is operable to determine an identification of the user equipment 102 in particular when it is registering or detected by the device locator 201. According to this embodiment the device 200 comprises the selector 205 for selecting a group 103 of user equipment 102 from a plurality of located user equipments 102 depending on the identification of the user equipment 102. In this case, the selector 205, for example, selects the group 103 depicted in figure 1.

According to an example, the identification of user equipment 102 may indicate that the user equipment 102 is part of a fire brigade. In this case, all user equipment 102 that belong to the same fire brigade may be identifiable by the receiver 206 from this identification. According to this example, the selector 205 is then adapted to select all user equipment 102 belonging to the group of the fire brigade.

In this case the sender 204 is operable to send a message to the selected group 103. In this case also the guidance system 203 adapted to map the positions and the identification to the directions information. To that end, the pre-determined rule comprises additional information indicating specific direction information for specific group of user equipments.

Furthermore, the device 200 may be operable to detect a change to a position or another event occurring and to push an updated message to an individual user equipment 102. To that end, the device 200 is adapted to trigger the event detector or the device locator frequently in order to perform the aforementioned detections. Likewise, the guidance system 203 is adapted to repeatedly determine guidance information upon the detection of a change. Furthermore, the sender 204 is operable to send the message upon detection of such change.

Pushing an update message to an individual user equipment 102 this way allows the device 200 to frequently inform the users of the individual user equipment 102 about any changes to the emergency situation or the evacuation plan. This is particularly helpful when the individual user equipment belonging to the selected group 103 is informed about a concerted evacuation plan.

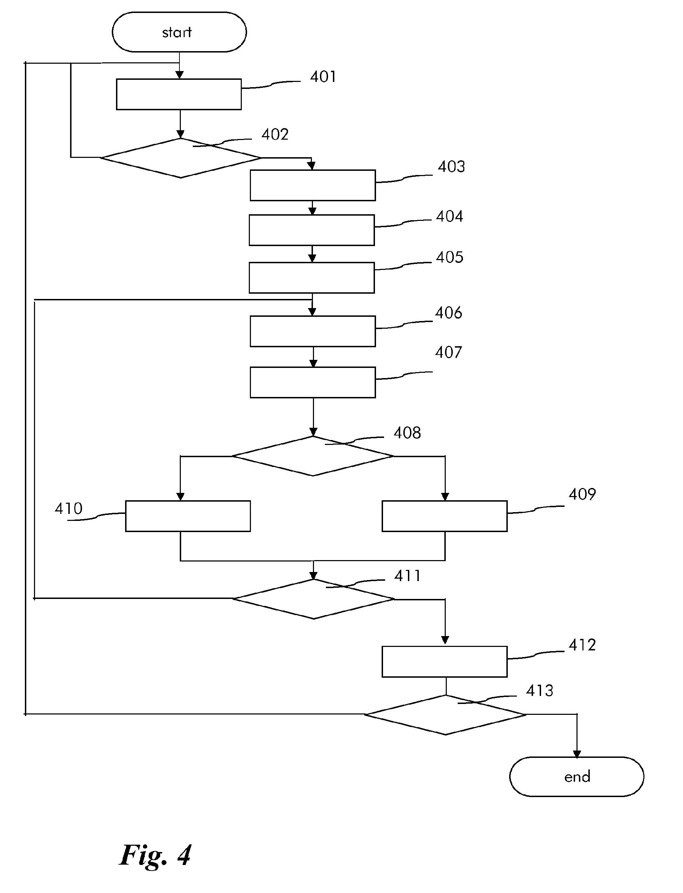

As an example for processing a method is described below, making reference to figure 4.

The message starts, for example, whenever the device 200 is switched on by an operator. After the start a step 401 is executed.

In step 401 input is received, for example, from aforementioned sensors or the aforementioned voice processing unit.

Furthermore, in step 401 information regarding the user equipment 102 is received, for example, by interacting with corresponding sender of the user equipment 102 directly or the corresponding sender of a server providing this information. In the first case the interaction may be via aforementioned computer program on the user equipment 102, for example, an app. In the latter case the server of the network operator may provide the information about the user equipment. In any case, the information regarding the user equipment 102 is, for example, the identification of the user equipment 102. Afterwards a step 402 is executed.

In step 402 a test is performed to detect an emergency event based on rules. The emergency event may be detected by comparing the received input from the sender to pre-determined threshold values for the respective signals. In the example of the CO sensor, for example, the emergency event is detected when the CO sensor signal indicates a concentration of CO gas higher than a pre-determined level. In case of using voice processing the emergency event may be detected when the signal received indicates that an emergency call has been received.

The rules defining the thresholds for the detection of emergency events may be pre-determined and stored in the device 200. Such rules may map individual inputs to individual thresholds or may map multiple inputs to a combined threshold using formulas describing events. Such rules may be formed using metadata that is possible to determine the emergency event. Prediction of abnormal behaviors may be used, in particular, when using intelligent video surveillance systems to gather the input. Other methods of alarm notification and signaling may be used as well.

Instead of voice processing HD integrated systems offering video analytics may be used as well to detect events like, for example, gunshots or screams.

Afterwards, a step 403 is executed in case an emergency event has been detected, otherwise the step 401 is repeated to continue monitoring the area in steps 401 and 402.

In step 403, the position of the event in the pre-determined layout is located by defining an event zone in the pre-determined layout based on rules. For example, the position of the event 101 in the pre-determined layout is determined by identifying the sender of the received input as described above.

Furthermore, the event zone is defined in a pre-determined layout as depicted in figure 1.

In the example the rule used to define the event zone maps the position of the event 101 to the description of the room in the pre-determined layout as described by metadata. In the example, construction of the skyscraper or airport, such as walls or fire doors, are used to define the event zone. Afterwards a step 404 is executed.

In step 404 perimeter zones, for example, adjacent to the event zone are located based on rules. For example, the aforementioned rules considering the construction of the airport or the skyscraper such as fire doors or walls are used to determine rooms next to the event location. This way the rooms next to the disaster area are identified and located as perimeter zones.

In the example, depicted in figure 1, one perimeter zone is located that surrounds the position of the event, that is the disaster area and covers the rest of the pre-determined layout. In more complex structures having different floors and multiple rooms and corridors different perimeter zones may be defined. For example, a first set of perimeter zones may be defined that surrounds the event zone. Additionally, another set of perimeter zones may be defined that is more distant to the event zone, for example, separated from the event zone by at least one of the adjacent perimeter zones.

Additionally or alternatively, the rules may comprise determining the different zones depending on received input from aforementioned sensors or the emergency call. For example, video surveillance, smoke or fire detection, emergency call or SMS may be used to classify individual zones into normal, warning or emergency situation zones.

While in the example, according to figure 1 only one disaster area is classified as emergency zone several of the perimeter zones may be classified as emergency zones as well. Likewise, several of the surrounding perimeter zones may be classified as warning zones. Furthermore, zones that are for example outside of the structure, described as the predetermined layout 100 may be classified as normal zones.

Additionally or alternatively, safe zones within the pre-determined layout 100 may be classified as normal zones as well depending on the input. Afterwards a step 405 is executed.

In step 405 the position of a user equipment is located, for example, by determining the zone that the user equipment is located in. To that end, the information received about user equipment is used to determine the position of user equipment either by wireless triangulation or directly from the GPS coordinates received. Methods for locating the positions of user equipments using wireless triangulation or GPS coordinates are well known and not described here. Afterwards a step 406 is executed.

In step 406 the identification of user equipment is determined from the received input. For example, an individual MAC address or IP address is determined as identification of the user equipment. Alternatively, a name or a symbol may be used as well. Afterwards a step 407 is executed.

In step 407 the user equipment is classified depending on the identification of the user equipment. In the example, the user equipment may belong to the group 103 or not. Belonging to the group 103, for example, means that the user equipment 102 is classified as belonging to a rescue team. In case the identification of the user equipment does not indicate that the user equipment is part of the group 103 the respective user equipment 102 is classified as individual user equipment.

In an example user equipments 102 having the IP address identifying them as belonging to the same subnet may be identified as belonging to the group 103. Likewise, user equipments identified by the same symbol or name may be classified as belonging to the same group 103.

In the example of the fire rescue team the user equipments 102 that are handed to the members of the fire rescue team are, for example, preprogrammed to have the same identification. In this case all user equipments 102 having the same identification are classified member of the group 103. According to this example, all other user equipments 102 are classified as individual.

The classification is, for example, stored as metadata assigned to the identification of the respective user equipment.
Afterwards a step 408 is executed.

In step 408 a test is performed to determine whether the user equipment was selected for a group or not. In case the user equipment was selected for a group, step 409 is executed, otherwise step 410 is executed.

In step 409 direction information is determined as content of the message depending on the zone of user equipment and the rule for this zone and/or the group. This means that the rule maps the position of the predetermined event, that is the event zone, and the position of the user equipment, that is the zone in which user equipment is located, to the direction information considering the group affiliation of the user equipment.

In the example of the fire rescue team all user equipments 102 being in the same zone, for example, get the same direction information. In case the user equipment 102 is in the disaster area, for example, the direction information indicates the fact that they arrived at the disaster area. Likewise, the fire rescue team members being in perimeter zones of the disaster area may be guided by the direction information to the nearest entrance into this disaster area using the direction information determined via such rule.

Afterwards a step 411 is executed.

In step 410 direction information for a message to the individual user equipment is determined depending on the zone of the user equipment and the rule for individual user equipments. In an example all individual user equipments 102 are considered to belong to persons in need for help. In that case the rule for individual user equipments indicates the nearest exits and information to leave the danger area immediately in case that the user equipment 102 is located in the disaster area. Likewise, the rule indicates to stay away from the disaster area for individual user equipments located outside of the disaster area.

Afterwards step 411 is executed.

Steps 409 and 410 are executed to determine the direction information depending on the position of the pre-determined event and the position of the user equipment relative to a pre-determined layout 100.

This means that more complex rules may also be used that, for example, determine the fastest way through several zones or that determine changes of floors for pre-determined layouts having several stories.

In step 411 a test is performed to determine whether all located user equipments have been processed already or not. In case all located user equipments 102 have been processed, a step 412 is executed. Otherwise step 406 is repeated in order to process the remaining user equipments.

Alternatively to performing a test in step 411 a parallel process may be started for all of the located user equipments or parts of the located user equipments in order to proceed more quickly to step 412.

The messages determined in step 409 and 410 comprise preferably the address of the user equipment that the direction information determined in the respective step is meant for.

In step 412, the messages determined previously are sent to the respective user equipment 102 using the address. Afterwards a step 413 is executed.

In step 413 a test is performed to detect if an end command indicating that the method should end is received or not. In case an end command is detected the method ends. Otherwise the step 401 is repeated.

An end command may, for example, be a switch off signal from an operator pressing an appropriate button on the device 200.

Additionally to performing the methods for each of the user equipments located as described above the method may be repeated frequently to detect changes to the position to of user equipments and to modify the direction information for the user equipments upon the detection of such change. To that end, the respective steps of the method are repeated frequently.

Furthermore, the method may be repeated frequently in order to detect changes of the event, for example, whether the emergency event has created a different emergency event in another zone previously being a perimeter zone. The event detected may be that the emergency event is over and the evacuation is completed.

In any case, the method comprises receiving information regarding the user equipment by interacting with a corresponding sender of the user equipment or a server providing the information as described above. This also means that user equipment that is located in one of the subsequent passes of the method is likewise receiving direction information.

Furthermore, the method may comprise interacting with a corresponding sender and receiver of the user equipment 102 to output direction information received in the message via a human machine interface. The interaction may be sending and receiving of direction information in a single message as described above, for example, a text message or voice or a combination of voice and graphical information. Likewise, several subsequent messages may be used in order to provide direction information in a high resolution video mode guiding the user of the user equipment interactively through the pre-determined layout 100 depending on the position of the user equipment 102 within the pre-determined layout 100 and the position of the detected event 101.

In a preferred embodiment, the human machine interface may be adapted to provide information about the status of the person using the user equipment 102. In this case for example the user equipment 102 may send a request for a specific format of direction information.

In this case the guidance system 203 is adapted to determine direction information according to the received request. In an example blind user may use a user equipment 102 adapted to send a request for audio direction information. In this case the guidance system 203 is adapted to determine the direction information as audio.

Preferably the human machine interface is adapted to configure the user equipment 102 accordingly.

A computer program product may be used, for example, a server providing software comprising computer readable programs to implement the method described above.

This means that the method described above correlates the emergency situation with location of individual users in the pre-determined area 100. The rule based process will then define distinct emergency situations associated danger zones and metadata will be used to process and store rescue and evacuation direction information, for example, as multimedia information to permit well coordinated rescue and evacuation guidance not only to fire fighting staff but also to the individuals being affected by the disaster.

Additionally, the surrounding area of the disaster area may be informed via announcements or information displays at a publicly accessible in the skyscraper or airport. To this end the device 200 may comprise an output that is operable to interact with the respective announcement systems of the airport or skyscraper.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A device (200) comprising
- a device locator (201) operable to determine the position of a user equipment (102) relative to a predetermined layout,
- an event detector (202) operable to upon detection of the occurrence of a predetermined event determine the position of the event (101) relative to the predetermined layout (100),
- a guidance system (203) operable to determine direction information depending on the position of the event (101) and the position of the user equipment (102) relative to the predetermined layout (100), and
- a sender (204) operable to send a message addressed to the user equipment (102) containing the direction information.

2. The device (200) according to claim 1, comprising a receiver (206) for receiving information regarding the user equipment (102) operable to interact with a corresponding sender of the user equipment (102) or of a server providing the information.

3. The device (200) according to any of the aforementioned claims, wherein the guidance system (203) is operable to access at least one predetermined rule mapping the respective positions to the direction information.

4. The device (200) according to any of the aforementioned claims, wherein the receiver (206) is operable to determine an identification of the user equipment (102).

5. The device (200) according to claim 4, comprising a selector (205) for selecting a group (103) of user equipments (102) from a plurality of located user equipments (102) depending on the identification of the user equipment (102), wherein the sender (204) is operable to send the message to the selected group (103).

6. The device (200) according any of the aforementioned claims, operable to detect a change to the a position or another event and to push an updated message to an individual user equipment (102).

7. A user equipment (102) comprising a receiver (301) and a sender (302) operable to interact with corresponding sender and receiver of a device (200) according to any of claims 1 to 6 respectively, further comprising a human machine interface (303) operable to output direction information received in the message according to any of claims 1 to 6.

8. A method comprising
- locating (405) the position of a user equipment (102) relative to a predetermined layout (100),
- upon detection (402) of the occurrence of a predetermined event determining (403) the position of the event (101) relative to the predetermined layout (100),
- determining (409, 410) direction information depending on the position of the predetermined event (101) and the position of the user equipment (102) relative to the predetermined layout (100),
- sending a message addressed to the user equipment (102) containing the direction information.

9. The method according to claim 8, comprising receiving (401) information regarding the user equipment (102) by interacting with a corresponding sender of the user equipment (102) or of a server providing the information.

10. The method according to any of claims 8 or 9, comprising accessing at least one predetermined rule mapping the respective positions to the direction information.

11. The method according to any of claims 8 to 10, comprising determining an identification of the user equipment (102) from received information.

12. The method according to claim 11, comprising selecting a group (103) of user equipments (102) from a plurality of located user equipments (102) depending on the identification of the user equipment (102) and sending a message to the selected group (103).

13. The method according any of claims 8 to 12, comprising detecting a change to the position or another event and pushing an updated message to an individual user equipment (102).

14. The method according to any of claims 8 to 13, comprising interacting with a corresponding sender and receiver to output direction information received in the message via a human machine interface.

15. A computer program product comprising a computer usable medium having a computer readable program, wherein said computer readable program, when executed on a computer, causes the computer to perform the steps of the method according to any of claims 8 to 14.
